# EUROPÄISCHE PATENTSCHRIFT

(11) **EP 1 916 124 B1**
(45) Veröffentlichungstag und Bekanntmachung des Hinweises auf die Patenterteilung: **18.03.2009**
(21) Anmeldenummer: 07020750.1
(22) Anmeldetag: 24.10.2007
(51) Int. Cl.: B60C 25/138

(54) **Vorrichtung zum Aufziehen eines Reifens auf eine Felge eines Fahrzeugrades**
Device for mounting a tyre on the wheel rim of a vehicle
Dispositif destiné au montage d'un pneu sur une jante de roue de véhicule

(30) Priorität: 28.10.2006 DE 102006050968
(43) Veröffentlichungstag der Anmeldung: 30.04.2008
(73) Patentinhaber: Schenck RoTec GmbH, 64293 Darmstadt (DE)
(72) Erfinder: Lehr, Werner, 64397 Modautal (DE); Peinelt, Andreas, 64319 Pfungstadt (DE)
(74) Vertreter: Behrens, Helmut

(56) Entgegenhaltungen:
- DE-C1- 10 222 164

## Beschreibung

Die Erfindung betrifft eine Vorrichtung zum Aufziehen eines Reifens auf eine Felge eines Fahrzeugrades gemäß dem Oberbegriff des Patentanspruchs 1.

Beim Aufziehen von Reifen auf Felgen bzw. Scheibenrädern werden derzeit beim industriellen Aufziehen häufig automatische Aufziehvorrichtungen eingesetzt, mit denen auch unterschiedliche Scheibenradtypen mit unterschiedlichen Scheibenradgrößen nacheinander folgend aufgezogen werden können. Dabei werden auf den verschiedenen Scheibenradtypen auch unterschiedliche Reifen mit unterschiedlichen Querschnittsverhältnissen von ca. 65% bis 25 % aufgezogen. Dazu sind Verstelleinrichtungen am Aufziehkopf der Aufziehvorrichtung vorgesehen, durch die die Aufziehwerkzeuge auf unterschiedliche Scheibenradtypen mit verschiedenen Breiten und Durchmessern automatisch eingestellt werden können. Besondere Schwierigkeiten bei der Einstellung verursachen dabei der große Scheibenraddurchmesserbereich von derzeit 12" bis 25", bei dem die Aufziehwerkzeuge radial in unterschiedliche Richtungen verstellt werden müssen.

Eine gattungsgemäße Aufziehvorrichtung mit automatischer Einstellvorrichtung ist aus der DE 102 22164 C1 bekannt. Diese Aufziehvorrichtung enthält eine Haltevorrichtung, auf die eine vorgesehene Felge bzw. Scheibenrad horizontal aufgespannt wird. Oberhalb des Scheibenrades ist ein drehbar angetriebener Aufziehkopf angeordnet, an dem als Aufziehwerkzeuge ein Wulstabweiser, eine Andruckrolle und ein Niederhalter befestigt ist. Dabei ist der Wulstabweiser und die Andruckrolle an einem gemeinsamen horizontalen Trägerarm in geringem Abstand voneinander angebracht, durch den die Werkzeuge auf zwei verschiedene Kreisbahnen um die Dreh- bzw. Radachse positionierbar und über zwei Spindelantriebe axial bzw. vertikal einzeln verstellbar sind. Der Trägerarm ist als ganzes durch einen separaten radialen Spindelantrieb gemeinsam auf bestimmte Radien um die Radachse einstellbar, so dass mit dieser Aufziehvorrichtung nacheinander automatisch unterschiedliche Reifen mit verschiedenen Durchmessern und Querschnittsverhältnissen auf Scheibenrädern mit verschiedenen Breiten und Raddurchmessern aufgezogen werden können. Da der Wulstabweiser und die Andruckrolle durch den Trägerarm horizontal starr miteinander verbunden sind, ist der Wulstabweiserfinger und die tangential auf der Reifenwand umlaufende Andruckrolle durch die sich mit dem Umlaufdurchmesser ändernden Tangentialwinkel im Grunde nur auf eine bestimmte Reifen- und Felgengröße genau einstellbar. Denn bei großen Abweichungen von der genau abgestimmten Reifen- oder Felgengröße liegt dann die Andruckrolle nicht mehr tangential auf der Reifenwand auf und/oder der Wulstabweiserschuh nimmt eine ungünstige Winkelstellung zur Innenwand des Reifenwulsts oder zum Außenrand des Felgenhorns ein. Dadurch kann es insbesondere bei größeren Verstellbereichen und der Aufziehung von extremen Niederquerschnittsreifen zu Aufziehschwierigkeiten oder Felgenrandbeschädigungen kommen, so dass mit einer derartigen Aufziehmaschine nur ein begrenzter Bereich unterschiedlicher Reifen- und Felgengrößen aufziehbar ist. Da derzeit bei PKW-Rädern Scheibenraddurchmesser von 12" bis 25" gebräuchlich sind, kann mit einer derartigen Aufziehmaschine ohne manuelle Einstellvorgänge nicht das gesamte Reifenspektrum nacheinander folgend störungsfrei aufgezogen werden.

Der Erfindung liegt deshalb die Aufgabe zugrunde, die eingangs genannte Aufziehvorrichtung derart zu verbessern, dass damit ohne manuelle Einstellvorgänge PKW-Reifen großer Querschnitts- und Innendurchmesserunterschiede auf entsprechende Felgengrößen störungsfrei und sicher aufziehbar sind.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die Verstelleinrichtung eine winkelrichtigen Radialverschiebung aller Aufziehwerkzeuge erreichbar ist mit der eine derartige Aufziehmaschine nahezu alle gängigen PKW-Reifengrößen auf nahezu alle zugehörigen Scheibenradtypen von 12" bis 25" Durchmesser ohne manuelle Einstell- oder Umrüstarbeiten nacheinander folgend automatisch aufziehen kann. Dabei hat die genaue radiale Verstellung unter Berücksichtigung der vorgegebenen Tangentialwinkel der Aufziehwerkzeuge gleichzeitig den Vorteil, dass damit auch alle Reifentypen mit extremen Niederquerschnittsverhältnissen bis 25% störungsfrei aufziehbar sind.

Die Erfindung hat weiterhin den Vorteil, dass durch die mechanischen Verstellmittel innerhalb des drehbaren Aufziehkopfes keine drehbare Verkabelung für Stellmotoren oder drehbare Anschlussleitungen für Hydraulik- oder Druckluftantriebe notwendig sind, die durch die permanenten Drehbewegungen störanfällig wären.

Bei einer besonderen Ausführungsart der Erfindung, bei der die Verstelleinrichtung durch eine in der Antriebswelle geführte Schubstange einstellbar ist, hat den Vorteil, dass durch eine einfache drehunabhängige Vertikalbewegung mindestens zwei verschiedene Aufziehwerkzeuge unterschiedlicher Winkelstellungen unabhängig voneinander radial und tangential verstellbar sind.

Eine weitere besondere Ausführungsart der Erfindung, bei der die Verstelleinrichtung mit unterschiedlich verschiebbaren Verstellplatten ausgestattet ist, die durch ein Umlenkelement längs verschiebbar sind, hat den Vorteil, dass damit durch eine Längsverschiebung zwei oder drei Aufziehwerkzeuge mit winkelrichtigen radialen Verschiebewegen an einen großen Bereich verschiedener Scheibenraddurchmesser angepasst werden können. Dabei bewirkt das Umlenkelement, dass als Umlenkstange ausgebildet ist, an der zwei unterschiedliche Neigungswinkel eingearbeitet sind vorteilhafterweise, dass durch jede einzelne Winkelneigung eine der Verstellplatten mit unterschiedlichen Verstellwegen horizontal und radial verschoben wird. Dadurch verschieben sich die Werkzeuge gleichzeitig vorteilhafterweise immer dem Durchmesser der Felge angepasst.

Bei einer zusätzlichen Ausführungsart der Erfindung, bei der die Verstelleinrichtung mit tangentialen Verstellmitteln vorgesehen ist, hat den Vorteil, dass auch bei unterschiedlichen Scheibenraddurchmessern eine vorgegebene Tangentialwinkelstellung automatisch der radialen Verstellung nachgeführt wird. Dabei wird durch einen Gelenkhebel als tangentiales Verstellmittel bewirkt, der bei einer radialen Verschiebung immer durch die Drehachse gleitet, dass zumindest der Wulstabweiser immer tangential zum Felgenrand ausgerichtet bleibt. Gleiches gilt auch für die Nachlaufrolle, die vorteilhafterweise über ein Drehgelenk als tangentiales Verstellmittel mit der Andruckrolle verbunden ist.

Die Erfindung wird anhand eines Ausführungsbeispiels, das in der Zeichnung dargestellt ist, näher erläutert. Es zeigen:
- Fig. 1:: eine perspektivische Seitendarstellung eines Aufziehkopfes einer Aufziehvorrichtung mit einer Antriebswelle und drei Aufziehwerkzeugen, und
- Fig. 2:: eine Draufsicht von unten auf den Aufziehkopf

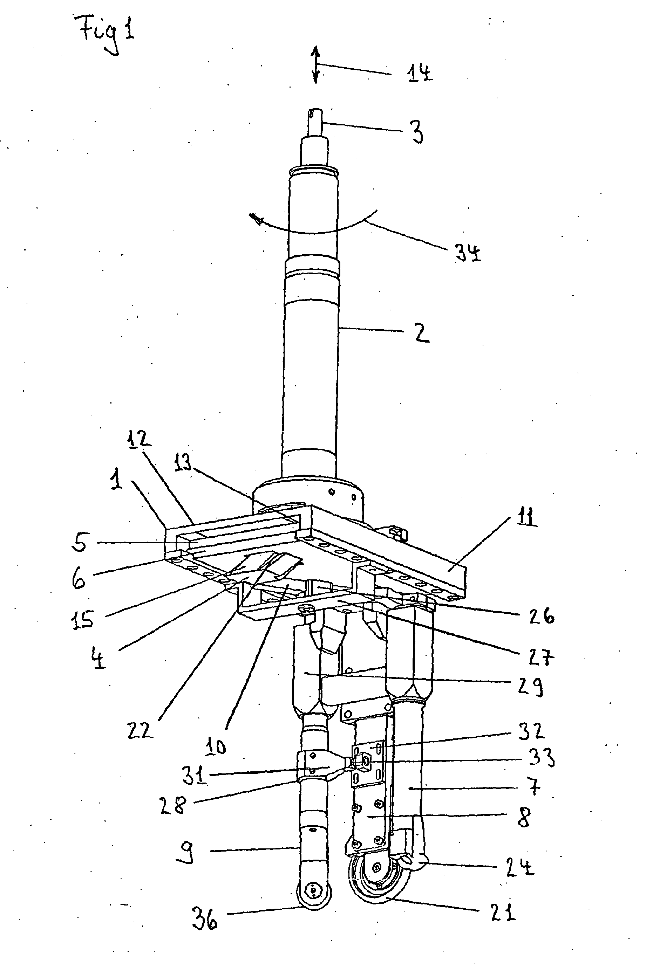

In Fig. 1 der Zeichnung ist ein perspektivisch dargestellter Aufziehkopf 1 einer Aufziehmaschine mit einer Antriebswelle 2 und drei Aufziehwerkzeugen 7,8,9 dargestellt, der als Verstelleinrichtung eine durch die Antriebswelle 2 geführte Schubstange 3 enthält, an der als Verstellmittel eine schräg angeordnete Umlenkstange 4 befestigt ist, die zwei separate Verstellplatten 5,6 horizontal verschiebt, wobei die untere Verstellplatte 6 mit einem Wulstabweiser 7 und einer Nachlaufrolle 9 und die obere Verstellplatte 5 mit einer Andruckrolle 8 kraftschlüssig verbunden ist.

Die Aufziehmaschine als Vorrichtung zum Aufziehen eines Reifens auf einer Felge bzw. eines Scheibenrades besteht im Wesentlichen aus einem nicht dargestellten Maschinengestell, an dem unten eine nicht dargestellte Haltevorrichtung befestigt ist. Eine derartige Haltevorrichtung ist aus der DE 102 56870 A1 bekannt. Zum Aufziehen des Reifens wird zunächst die vorgesehene Felge auf eine Ablage der Haltevorrichtung horizontal aufgelegt und festgespannt. Dann wird darauf ein passender Reifen so positioniert, dass mindestens die untere Reifenwulst schräg im Felgenbett liegt und mindestens ein Teil des oberen Reifenwulstes schräg das obere Felgenhorn überragt.

Zum Aufziehen des Reifens wird dann der über der Haltevorrichtung befestigte Aufziehkopf abgesenkt, um den oberen Reifenwulst über das obere Felgenhorn ins Felgenbett zu drücken. Dazu sind die Aufziehwerkzeuge 7,8,9 entsprechend der Felgenbreite vertikal und entsprechend dem Felgendurchmesser horizontal positioniert und der Aufziehkopf 1 wird dann mindestens einmal um seine Drehachse 20 gedreht, wodurch die Andruckrolle 8 und die Nachlaufrolle 9 den Reifenwulst ins Felgenbett drücken. Nachfolgend kann der aufgezogene Reifen in der Aufziehvorrichtung oder einer weiteren Einrichtung meist mit Hilfe einer Füllglocke mit Druckluft befüllt werden.

Da mit einer derartigen Aufziehmaschine bzw. Aufziehvorrichtung möglichst nacheinander selbsttätig alle gängigen PKW-Reifengrößen auf entsprechende Felgen bzw. Scheibenräder aufziehbar sein sollen, müssen die Aufziehwerkzeuge 7,8,9 genau auf die verschiedenartigen Reifen- und Felgentypen einstellbar sein. Zur Anpassung an die Felgenbreite ist der Aufziehkopf 1 insgesamt und die daran vertikal befestigten Aufziehwerkzeuge 7,8,9 teilweise auch einzeln auf die vorgesehene Höhe vertikal absenkbar. Dabei sind die einzelnen Absenkwerte durch Abtastung der Felgentype oder der Felgenabmessungen vorgebbar. Das Hauptproblem der automatischen Einstellung ist dabei der unterschiedliche Felgendurchmesser von derzeit 12" bis 25" und die Vielzahl der extremen Niederquerschnittsverhältnisse von 65% bis 25%. Dazu waren bisher meist zwei verschiedene Aufziehvorrichtungen notwendig, wobei mit einer die kleineren Felgendurchmesser mit größeren Querschnittsverhältnissen von z.B. 12" bis 17" und mit einer anderen Aufziehvorrichtung die größeren Felgendurchmesser mit den kleineren Niederquerschnittsverhältnissen aufgezogen wurden.

Mit dem erfindungsgemäßen Aufziehkopf 1 können jetzt mit einer Aufziehvorrichtung nacheinander alle gängigen Reifentypen auf entsprechende Scheibenräder automatisch aufgezogen werden. Dazu weist der Aufziehkopf 1 im Grunde eine neuartige Verstelleinrichtung auf, mit der mindestens sowohl der Wulstabweiser 7 als auch die Andruckrolle 8 unter Berücksichtigung einer vorgegebenen Tangentialeinstellung beider Aufziehwerkzeuge 7,8 mit gleich großen radialen Verstellwegen bezogen auf die Drehachse 20 einstellbar sind.

Der Aufziehkopf 1 enthält deshalb eine angetriebene und drehbar gelagerte Antriebswelle 2, an der eine horizontal angeordnete Kopfplatte 11 mit der Verstelleinrichtung und den Aufziehwerkzeugen 7,8,9 befestigt ist. In der Antriebswelle 2 ist eine Durchgangsbohrung angebracht, in der eine in beide vertikale Schubrichtungen 14 verschiebbare Schubstange 3 angeordnet ist. Diese Schubstange 3 dient zur radialen Verstellung der Aufziehwerkzeuge 7,8,9 und ist Teil der Verstelleinrichtung und stellt ein Verstellmittel dar.

Der Aufziehkopf 1 ist vertikal hängend in einem nicht dargestellten Maschinengestell angeordnet und oben über die Antriebswelle 2 im Maschinengestell befestigt. Die Kopfplatte 11 ist dabei am unteren Ende der Antriebswelle 2 rechtwinklig und horizontal mit dieser starr verbunden. Die Kopfplatte 11 besitzt oben eine rechtwinklige Deckplatte 12 mit seitlichen Führungsschlitzen 13, in dem die zwei verschiebbaren Verstellplatten 5,6 eingepasst sind. Die Verstellplatten 5,6 sind Teil der Verstelleinrichtung und stellen mechanische radiale Verstellmittel dar. Dabei liegen die Verstellplatten 5,6 gleitend parallel aufeinander, wobei die obere Verstellplatte 5 zur radialen Einstellung der Andruckrolle 8 und die untere Verstellplatte 6 zur radialen Verstellung des Wulstabweisers 7 und der Nachlaufrolle 9 vorgesehen ist.

Zur radialen Einstellung der Verstellplatten 5,6 ist am Ende der Schubstange 3 im Bereich der Deckplatte 12 eine Umlenkstange 4 mit etwa rechteckigem Querschnitt befestigt, die seitlich schräg an dieser angeordnet ist. Die Umlenkstange 4 ist ebenfalls Teil der Verstelleinrichtung und stellt gleichzeitig ein mechanisches Verstellmittel dar. Dabei besitzt die Umlenkstange 4 zur Schubstange 3 oder der Drehachse 20 des Aufziehkopfes 1 einen Abschrägungswinkel von vorzugsweise 45°, wobei die Abschrägung in eine Längsrichtung 35 der Verstellplatten 5,6 gerichtet ist. Dadurch wird eine Umlenkung der vertikalen Betätigungsrichtung der Schubstange 3 auf die Verstellplatten 5,6 von 90° und somit horizontal erreicht. Dazu ist in den Verstellplatten 5,6 jeweils eine Aussparung 37 eingelassen, in die die Umlenkstange 4 mit einer Gleitlagerung eingepasst ist. Die obere Verstellplatte 5 ist dabei von den beiden schräg angeordneten Deckflächen 15 der Umlenkstange 4 gleitend radial in beide Längsrichtungen 35 der Verstellplatte 5 stufenlos verschiebbar. Mit der oberen Verstellplatte 5 wird dabei die Andruckrolle 8 entsprechend der vorgegebenen Felgengröße radial verstellt, dessen radialer Verstellweg durch die Schubstangenverstellung gesteuert wird.

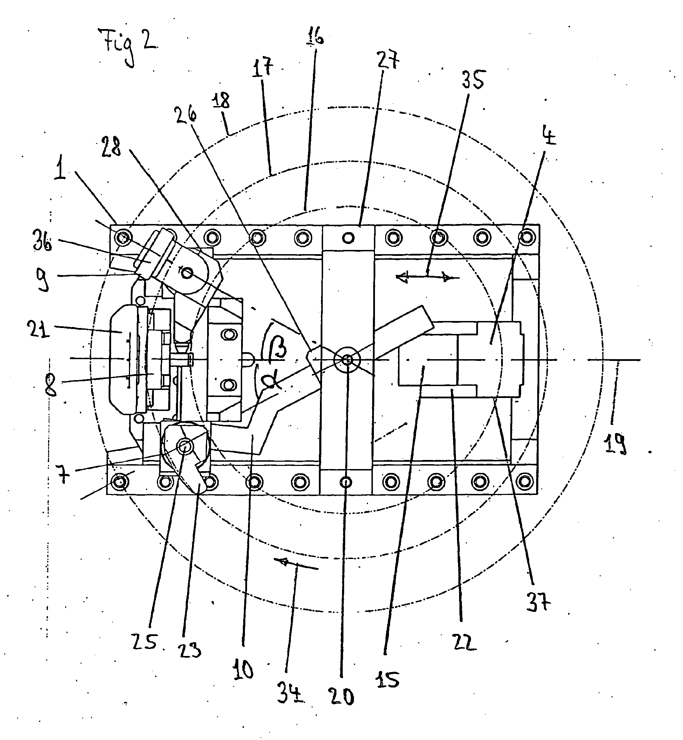

Die Anordnung der Verstelleinrichtung mit dessen Verstellmitteln 3,4,5,6 und die Anordnung der Aufziehwerkzeuge 7,8,9 sind im Einzelnen aus Fig. 2 der Zeichnung ersichtlich. Dort sind drei verschiedene kreisförmige Felgenumfänge eingezeichnet, wobei der innere Kreisumfang 16 schematisch eine kleine Felge, der mittlere Kreisumfang 17 eine mittlere Felgengröße und der äußere Kreisumfang 18 eine große Felge darstellt, die mit der Aufziehvorrichtung stufenlos einstellbar sind. Dabei befindet sich die dargestellte radiale Einstellung auf einer Aufziehposition für eine mittlere Felgengröße von z.B. 17". Durch die Anordnung der Andruckrolle 8 rechtwinklig zu einer Durchmesserlinie 19, die gleichzeitig in Längsrichtung 35 der Verstellplatten 5,6 verläuft, läuft die Andruckrolle 8 immer tangential auf der Reifenseitenwand unabhängig von dessen radialen Verstellweg zur Drehachse 20. Denn die Durchmesserlinie 19 verläuft dabei immer durch die Drehachse 20 und gibt gleichzeitig die Verschieberichtung 35 der Verstellplatten 5,6 an.

Ein tangentialer Verlauf der Andruckrolle 8 ist insbesondere bei extremen Niederquerschnittsverhältnissen von 25% bis 45% wichtig, da bei derartigen Reifen die Andruckrolle 8 immer gerade und präzise auf der sehr schmalen und steifen Reifenseitenwand aufsetzen muss, um die schmale Reifenwand am Felgenhorn vorbei ins Felgenbett drücken zu können, ohne die Felge zu beschädigen. Wegen der Reifen mit sehr geringem Niederquerschnittsverhältnis muss deshalb die Andruckrolle 8 stets sehr dicht vom Felgeninnenrand auf der Reifenseitenwand aufsetzen, so dass zwischen der Andruckrolle 8 und dem äußeren Felgenrand am Felgenhorn nur ein geringer Abstand von etwa 4 mm vorgesehen ist. Deshalb ist bei der Erfindung vorzugsweise vorgesehen, die Verschiebung der Andruckrolle 8 bei der Einstellung auf eine andere Reifen- bzw. Scheibenradgröße auf einer Linie durch die Drehachse 20 zu führen, weil dadurch automatisch gewährleistet ist, dass das Laufrad 21 der Andruckrolle 8 stets tangential auf der Reifenseitenwand umläuft. Da die Verschiebung der Andruckrolle 8 dadurch stets radial zu einer Linie durch den Drehpunkt 20 erfolgt, ist dessen Verschiebeweg stets der radiale Abstand zwischen der zuvor eingesetzten Felge 16 und der nachfolgenden Felgengröße 17.

Winkelsymmetrisch zur Andruckrolle 8 sind in Drehrichtung 34 gesehen vor der Andruckrolle 8 als Aufziehwerkzeuge der Wulstabweiser 7 und nach der Andruckrolle 8 die Nachlaufrolle 9 angeordnet. Dabei weisen beide bei einer mittleren Felgengröße 17 vorzugsweise einen Winkelabstand α und β von ca. 30° bezogen auf die Drehachse 20 und die Durchmesserlinie 19 auf, damit auch bei extremen Niederquerschnittsverhältnissen noch ein genauer und sicherer Aufziehvorgang gewährleistet wird. Zur Einstellung auf eine andere Reifen- oder Scheibenradgröße werden sowohl der Wulstabweiser 7 als auch die Nachlaufrolle 9 wegen der symmetrischen Anordnung zur Andruckrolle 8 nur durch die untere Verstellplatte 6 in die vorgesehene radiale Aufziehposition verschoben. Bei einer axialen Verschiebung in beide Längsrichtungen 35 der oberen Verstellplatte 6 ist allerdings zu berücksichtigen, dass durch die Winkelfunktion der Wulstabweiser 7 und die Nachlaufrolle 9 sich gegenüber der Drehachse 20 und der Durchmesserlinie 19 um einen anderen radialen Weg verschieben, wie die radial verschiebbare Andruckrolle 8. Dieser winkelabhängige radiale Verschiebeweg ändert sich bei 25"-Scheibenrädern und 12"-Scheibenrädern gegenüber den mittleren Scheibenrädern von z.B. 17" um jeweils etwa 10 mm.

Ohne die erfindungsgemäße Verstelleinrichtung kann es dabei zu Berührungen der Scheibenräder oder zu Betriebsstörungen beim Aufziehvorgang, insbesondere bei großen Verstellbereichen führen. Bei einer exakten Einstellung auf verschiedenen Felgendurchmesser 16,17,18 müssen sich aber die Aufziehwerkzeuge 7,8,9 um den gleichen radialen Verschiebeweg in Bezug auf die Drehachse 20 verstellen lassen, um Fahrzeugräder mit extremen Niederquerschnittsverhältnissen und erheblichen Durchmesserunterschieden aufziehen zu können. Deshalb muss bei einer derartigen Aufziehvorrichtung gewährleistet sein, dass der Abstand des Wulstabweisers 7, der Andruckrolle 8 und der Nachlaufrolle 9 bei allen aufzuziehenden Radgrößen nach dem Einstellvorgang stets den gleichen radialen Abstand zum Felgenrand bzw. Felgenhorn aufweist. Bei einer unterschiedlichen Verschiebung der radialen Wege der einzelnen Werkzeuge 7,8,9.bezogen auf die Drehachse 20 würde sonst der Wulstabweiser 7 und die Nachlaufrolle 9 den Felgenrand beschädigen und/oder die Andruckrolle 8 zumindest bei extremen Niederquerschnittsreifen außerhalb der Reifenseitenwand umlaufen.

Diese Verschiebeunterschiede bei einer Längsverschiebung in eine Winkelrichtung berücksichtigt die Erfindung mit einer zusätzlichen Verschiebenut 22 an den Seitenbereichen der Umlenkstange 4, die gegenüber der Drehachse 20 eine spitzwinkligere Neigung als die Deckflächen 15 der Umlenkstange 4 aufweisen. Dadurch verschiebt sich die untere Verschiebeplatte 6 um einen größeren Verschiebeweg in beide Längsrichtungen 35 als die obere Verschiebeplatte 5 für die Andruckrolle 8. Da sich die Winkelabstände α und β bezogen auf die Drehachse 20 und die Durchmesserlinie 19 bei einer Einstellung auf 12"-Scheibenräder von ca. 45° und bei einer Einstellung auf 25"-Scheibenräder auf ca. 20° verändern, ist die Anpassung der Verschiebewege in beide Längsrichtungen 35 aufgrund der trigonometrischen Funktion nicht linear, so dass die Verschiebenut 22 im Grunde etwas gekrümmt sein müsste. Allerdings ist diese Unlinearität im praktischen Betrieb zu vernachlässigen, so dass die Ausführung der Verschiebenut 22 im Ausführungsbeispiel linear ausgebildet ist, wobei dann ein mittlerer Wert der Radialweganpassung von ca. ± 6% bezogen auf einen mittleren Scheibenraddurchmesser 17 von z.B. 17" erreicht wird. Dabei muss aber der Wulstabweiser 7 radial immer so weit verschoben werden, dass er auch bei großen Felgendurchmessern 18 von beispielsweise 25" eine 6%ige Verschiebewegverlängerung gegenüber 17"-Rädern aufweist, um nicht den Felgenrand bzw. das Felgenhorn zu berühren. In diesen Fällen wird dann wegen der linearen Verschiebenut 12 eine geringfügige Verlängerung des radialen Verschiebewegs der Andruckrolle 8 hingenommen, die dann bei extremen Niederquerschnittsverhältnissen bis 25% noch eine hinreichende Berührungsfläche auf der Reifenseitenwand gewährleistet.

Die genauen Werte dieser Anpassung können mit Hilfe der trigonometrischen Winkelfunktionen errechnet werden und zur Bemessung und Herstellung der Schräge bzw. Neigungen der Verschiebenut 22 zugrunde gelegt werden. Durch die winkelmäßige Anpassung trotz radialer Verschiebung aller Aufziehwerkzeuge 7,8,9 in eine gegenläufige Längsrichtung 35 ändert sich der Abstand der Aufziehwerkzeuge 7,8,9 bei allen Felgengrößen 16,17,18 zum Felgenhorn im Grunde nicht, so dass mit der erfindungsgemäßen mechanischen Einstellvorrichtung am Aufziehkopf 1 eine stufenlose Einstellung sowohl für Felgengrößen mindestens ab 12" bis mindestens 25" möglich ist.

Bei einer derartigen Verstellung in nur eine gegenläufige radiale Längsrichtung 35 besteht allerdings das Problem, dass damit sich gleichzeitig auch die Tangentialwinkel der Aufziehwerkzeuge 7,8,9 zum Felgenumfang 16,17,18 verändern. Dies löst die erfindungsgemäße Aufziehvorrichtung dadurch, dass sie die Verschiebung in eine gegenläufige Längsrichtung 35 auf eines der Aufziehwerkzeuge 8 bezieht und gleichzeitig die anderen beiden Aufziehwerkzeuge 7,9 entsprechend ihrer Winkeländerung Δα, Δβ nachführt. Vorzugsweise ist deshalb die Andruckrolle 8 senkrecht zur Verschiebung in Längsrichtung 35 und symmetrisch zur Durchmesserlinie 19 an der oberen Verschiebeplatte 5 befestigt. Damit verläuft die radiale Verschieberichtung immer durch den Drehpunkt 35 der Aufziehvorrichtung und den Drehpunkt des Laufrades 21 der Andruckrolle 8, so dass dieses immer tangential auf der Reifenseitenwand umläuft.

Zur Nachführung des tangentialen Winkels des Wulstabweisers 7 zum Felgenumfang 16,17,18 ist zusätzlich als Teil der Verstelleinrichtung noch ein Gelenkhebel 10 als Verstellmittel vorgesehen, der mit einem Führungsfinger 23 des Wulstabweisers 7 fest verbunden ist. Der Wulstabweiser 7 sorgt dafür, dass der Reifenwulst beim Aufziehvorgang in radialer Richtung außerhalb des Felgenhorns umläuft und von der nachfolgenden Andruckrolle 8 in vertikaler Richtung in das Felgentiefbett gedrückt wird. Dieser Wulstabweiser 7 besteht aus einem nach außen abknickenden Gleitblech 24, an dem ein in Drehrichtung 34 zeigender Führungsfinger 23 angefügt ist, um eine gute radiale Führung des Reifenwulstes zu gewährleisten und eine Berührung der Felgenaußenflächen auch bei nach außen vorstehenden Sternspeichen zu verhindern. Dabei muss der Führungsfinger 23 mit dem Gleitblech 24 auch bei unterschiedlichen Felgendurchmessern stets tangential zum Felgenumfang 16,17,18 ausgerichtet sein. Dies ist immer gewährleistet, wenn der Führungsfinger 23 senkrecht zu einer Linie zu seinem Drehpunkt 25 und der Drehachse 20 des Fahrzeugrades ausgerichtet ist. Deshalb ist der Gelenkhebel 10 im Drehpunkt der Drehachse 20 in einem Führungsteil 26 als Teil der Verstelleinrichtung drehbar und längs verschieblich gelagert. Dazu ist das Führungsteil 26 drehbar an einem Verbindungssteg 27 und auf der Drehachse 20 befestigt.

Bei einer radialen Verstellung der Verstellplatten 5,6 in beide Längsrichtungen 35 der Andruckrolle 8 gleitet der Gelenkhebel 10 entsprechend des Verstellweges in einer Gleitnut im Führungsteil 26 und bewegt sich dabei stets auf einer Linie durch den Drehpunkt 25 und die Drehachse 20, so dass sich der Führungsfinger 23 stets tangential zur Reifenwulst oder dem Felgenumfang 16,17,18 ausrichtet. Dadurch kann der Reifenwulst mit möglichst geringer Reibung durch eine große Gleitfläche durch die nachfolgende Andruckrolle 8 über das Felgenhorn in das Felgentiefbett geleitet werden.

Die tangentiale Winkelnachführung der Nachlaufrolle 9 erfolgt durch eine bewegliche Kopplung mit der Andruckrolle 8 mit Hilfe eines Drehgelenks 28. Dabei besteht die Nachlaufrolle 9 aus einem vertikalen Schaft 29, der oben an der oberen Verstellplatte 5 befestigt ist und somit gemeinsam mit dem Wulstabweiser 7 horizontal und in die gleiche Längsrichtung 35 verstellbar ist. Die Nachlaufrolle 9 ist für den Aufziehvorgang im Grunde nicht unbedingt notwendig, sondern dient lediglich zur längeren Fixierung des Reifenwulstes im Felgentiefbett, da dieser insbesondere bei extremen Niederquerschnittsverhältnissen durch deren steifere Reifenseitenwände sonst leicht wieder aus dem Felgentiefbett herausspringt. Deshalb ist die Vertikaleinstellung der Nachlaufrolle 9 mit der Andruckrolle 8 gekoppelt.

Am montageseitigen Ende des Werkzeugschafts 29 der Nachlaufrolle 9 ist an diesem die eigentliche Nachlaufrolle mit seinem Nachlaufrad 36 befestigt. Dieses Nachlaufrad 36 ist etwas kleiner als das Laufrad 21 der Andruckrolle 8, aber läuft etwa auf der gleichen Kreisbahn wie das Laufrad 21 um. Da auch dieses Nachlaufrad 36 bei jeder Reifen- oder Felgengröße tangential auf der Reifenseitenwand aufliegen soll, ist zwischen dem Werkzeugschaft 29 der Nachlaufrolle 9 und dem Werkzeugschaft der Andruckrolle 8 das Drehgelenk 28 angeordnet. Dieses Drehgelenk 28 besteht aus einem Dreharm 31 und einer Halteplatte 32, die über ein Kugelgelenk 33 miteinander verbunden sind. Dabei ist der Dreharm 31 am Werkzeugschaft 29 der Nachlaufrolle 9 und die Halteplatte 32 am Werkzeugschaft der Andruckrolle 8 befestigt. Der Werkzeugschaft 29 der Nachlaufrolle 9 ist dabei an der unteren Verstellplatte 6 drehbar gelagert, dessen Drehpunkt 25 symmetrisch zum Drehpunkt des Werkzeugschafts des Wulstabweisers 7 und bezogen auf die Durchmesserlinie 19 der Andruckrolle 8 ist. Bei einer radialen Verschiebung der Andruckrolle 8 und der Nachlaufrolle 9 wird deshalb durch das Drehgelenk 28 der Werkzeugschaft 29 der Nachlaufrolle 9 winkelmäßig nachgeführt, so dass auch bei einer radialen Verschiebung in Richtung der Andruckrolle 8 auch der Aufstandswinkel des Nachlaufrades 36 immer tangential zum Felgenumfang 16,17,18 ausgerichtet bleibt. Da die Nachlaufrolle 9 in ihrer radialen Richtung und Entfernung zur Drehachse 20 synchron zum Wulstabweiser 7 bewegt wird, ist der Winkelunterschied Δβ zur Verschieberichtung 35 der Andruckrolle 8 berücksichtigt, so dass die Nachlaufrolle 9 immer etwa auf der gleichen Kreisbahn, wie die Andruckrolle 8 umläuft. Hierdurch wird auch bei extremen Niederquerschnittsverhältnissen ein sicheres Umlaufen der Nachlaufrolle 9 auf der schmalen Reifenseitenwand gewährleistet.

Die vorstehend beschriebene Aufziehvorrichtung ist für einen rechtsdrehenden Antrieb vorgesehen, bei der zunächst der Wulstabweiser 7 als erstes mit dem Reifenwulst in Eingriff gelangt und nachfolgend die Andruckrolle 8 und die Nachlaufrolle 9 folgt. Bei einer linksdrehenden Aufziehvorrichtung wären die Aufziehwerkzeuge 7,8,9 in umgekehrter Reihenfolge angeordnet. Bei einer anderen Ausführung der Erfindung könnte die Nachlaufrolle 9 auch entfallen oder bei Bedarf noch eine weitere Nachlaufrolle oder ein vergleichbares Aufziehwerkzeug vorgesehen werden. Die Nachlaufrolle 9 muss auch nicht symmetrisch zum Wulstabweiser 7 angeordnet sein, sondern könnte auch einen größeren oder kleineren Nachlaufwinkel zur Andruckrolle 8 aufweisen. Dann wäre aber eine zusätzliche Verstellplatte als radiales Verstellmittel notwendig, die über eine zusätzliche Verschiebenut an der Umlenkstange 4 mit entsprechender Neigung den Nachlaufwinkel so berücksichtigt, dass der Verschiebeweg winkelrichtig an den der Andruckrolle 8 angepasst wäre.

Bei dem beschriebenen Ausführungsbeispiel beträgt der radiale Winkelabstand zwischen dem Wulstabweiser 7 und der Andruckrolle 8 im Mittel oder bei einer mittleren Scheibenradgröße von 17" ca. 30° und bei einem großen Verstellbereich für Scheibenräder von 12" bis 25" für ein 12"-Rad ca. 45° und für ein 25"-Rad nur ca. 20°. Durch eine derartige Verschiebung in nur eine gegenläufige Längsrichtung 35 entstehen winkelabhängige radiale Verschiebewegsunterschiede von ca. 20%, die ausgeglichen werden müssen, um in diesem Verstellbereich die Aufziehvorrichtung an die unterschiedlichen Scheibenraddurchmesser 16,17,18 und Querschnittsverhältnisse genau anzupassen. Dabei hat sich ein mittlerer Winkelabstand zwischen dem Wulstabweiser 7 und der Andruckrolle 8 von ca. 30% als vorteilhaft erwiesen, da größere Abstände noch größere Winkelverschiebeunterschiede ausgleichen müssten, was durch eine Veränderung des Neigungswinkels der Verschiebenut 22 zwar möglich wäre, aber zu größeren Verschiebekräften an der Umlenkstange 4 führen würde.

Bei einer anderen Ausführungsart der Aufziehvorrichtung könnte als Referenzverschieberichtung die Verschiebung in Längsrichtung auf den Wulstabweiser 7 vorgesehen und daran die radialen Verschiebewege und tangentiale Ausrichtung der Andruckrolle 8 und der Nachlaufrolle 9 winkelmäßig angepasst werden.

Bei einer weiteren Ausführungsart der Aufziehvorrichtung könnte diese auch so ausgeführt werden, dass die einzelnen Aufziehwerkzeuge 7,8,9 durch einzelne unabhängige Verstellplatten 5,6 oder durch unabhängig verschiebbare Gelenkhebel 10 als Verstellmittel winkelrichtig radial verstellbar sind, so dass immer gleiche radiale Verstellwege ansteuerbar sind. Dazu müssten dann aber für jede in Aufziehwerkzeug-Richtung verstellbare Verstellplatte oder Gelenkhebel eine separate Umlenkstange als Umlenkelement winkelrichtig ausgerichtet sein, wozu aber eine tangentiale Nachführung der Werkzeugschäfte entfiele. Eine derartige Ansteuerung der einzelnen Verstellplatten könnte auch mit einem Umlenkkegelgebilde als Umlenkelement statt einer Umlenkstange erfolgen, die eine mehrseitige richtungsgemäße Umlenkung bewirkt.

## Patentansprüche

1. Vorrichtung zum Aufziehen eines Reifens auf einer Felge eines Fahrzeugrades mit einer Felgenhaltevorrichtung und einem mit einer Antriebswelle (2) verbundenen Aufziehkopfes (1), an dem mindestens ein Wulstabweiser (7) und eine Andruckrolle (8) angeordnet sind, wobei am Aufziehkopf (1) eine Verstelleinrichtung vorgesehen ist, mit der mindestens der Wulstabweiser (7) und die Andruckrolle (8) auf bestimmte auf den Felgendurchmesser abgestimmte Radien um die Drehachse (20) einstellbar sind, **dadurch gekennzeichnet, dass** die Verstelleinrichtung mindestens mechanische radiale Verstellmittel (3,4,5,6) enthält, die jeweils separat mit dem Wulstabweiser (7) und der Andruckrolle (8) verbunden und die so angeordnet und ausgebildet sind, dass sie den Wulstabweiser (7) und die Andruckrolle (8) horizontal und radial etwa um den gleichen radialen Betrag zur Drehachse (20) unter Beibehaltung einer vorgegebenen Tagentialeinstellung verschieben.

2. Vorrichtung nach Anspruch 1, **dadurch gekennzeichnet, dass** die Verstelleinrichtung zur Einstellung der Radien für die unterschiedlichen Felgendurchmesser (16,17,18) in der Antriebswelle (2) des Aufziehkopfs (1) eine Schubstange (3) enthält, die im Aufziehkopf (1) endet und an der als radiales Verstellmittel mindestens ein Umlenkelement (4) zur radialen horizontalen Umlenkung der beiden Schubrichtungen (14) befestigt ist.

3. Vorrichtung nach Anspruch 1 oder 2, **dadurch gekennzeichnet, dass** die Verstelleinrichtung zur Einstellung der Radien für die unterschiedlichen Felgendurchmesser (16,17,18) am Aufziehkopf (1) als radiale Verstellmittel mindestens zwei Verstellplatten (5,6) enthält, die jeweils eine Aussparung (37) enthalten, in die mindestens ein eingepasstes Umlenkelement (4) zur radialen horizontalen Umlenkung der beiden Schubrichtungen (14) form- und kraftschlüssig eingreift.

4. Vorrichtung nach einem der vorhergehenden Ansprüche, **dadurch gekennzeichnet, dass** das Umlenkelement als mindestens eine seitlich schräg verlaufende Umlenkstange (4) ausgebildet ist, die in mindestens eine eingepasste Aussparung (37) einer jeden Verstellplatte (5,6) gleitend eingreift und durch die die Verstellplatten (5,6) horizontal und radial in mindestens beide gegenläufigen Längsrichtungen (35) verschiebbar sind.

5. Vorrichtung nach Anspruch 4, **dadurch gekennzeichnet, dass** die Umlenkstange (4) zur form- und kraftschlüssigen Kopplung mindestens eine in den Verstellplatten (5,6) gleitend angeordnete Deckfläche (15) mit vorgegebener Neigung zur Drehachse (20) aufweist.

6. Vorrichtung nach Anspruch 4 oder 5, **dadurch gekennzeichnet, dass** die Umlenkstange (4) zur form- und kraftschlüssigen Kopplung mit den Verstellplatten (5,6) mindestens eine in den Verstellplatten (5,6) gleitend angeordnete Deckfläche (15) und mindestens eine gleitend angeordnete Verschiebenut (22) mit der von der Deckfläche (15) abweichenden Neigungswinkel aufweist, wobei die Verstellplatten (5,6) nur in die beiden gegenläufigen Längsrichtungen (35) der Verstellplatten (5,6) verschiebbar sind.

7. Vorrichtung nach einem der vorhergehenden Ansprüche, **dadurch gekennzeichnet, dass** die Verstellplatten (5,6) im Aufziehkopf (1) parallel aufeinander gleitend verschiebbar angeordnet und in mindestens zwei gegenüberliegenden Führungsschlitzen (13) gelagert und mindestens in einer radialen gegenläufigen Längsrichtung (35) verschiebbar sind.

8. Vorrichtung nach einem der vorhergehenden Ansprüche, **dadurch gekennzeichnet, dass** die Verstelleinrichtung mechanische tangentiale Verstellmittel (10,28) enthält, die bei einer radialen horizontalen Verschiebung der radialen Verstellmittel (4,5,6) in nur zwei gegenläufige radiale Längsrichtungen (35), die in andere radiale Richtungen ausgerichteten Aufziehwerkzeuge (7,8,9) in ihren vorgegebenen Tangentialeinstellungen den Winkeländerungen Δα,Δβ nachführt.

9. Vorrichtung nach Anspruch 8, **dadurch gekennzeichnet, dass** als tangentiales Verstellmittel mindestens ein Gelenkhebel (10) vorgesehen ist, der auf seiner einen Seite starr mit einem verdrehbaren Aufziehwerkzeug (7) verbunden und auf seiner anderen Seite dreh- und längsverschiebbar auf der Drehachse (25) gelagert ist.

10. Vorrichtung nach Anspruch 8, **dadurch gekennzeichnet, dass** als tangentiales Verstellmittel mindestens ein Drehgelenk (28) vorgesehen ist, das auf seiner einen Seite starr mit einem verdrehbaren Aufziehwerkzeug (9) und auf seiner anderen Seite über einen verdrehbaren Dreharm (31) mit einem radial verschiebbaren Aufziehwerkzeug (8) verbunden ist.

## Claims

1. Device for fitting a tyre on a rim of a vehicle wbead with a rim holding device and a mounting head (1), which is connected to a drive shaft (2) and on which at least one bead deflector (7) and a pressing roller (8) are arranged, wherein an adjusting means is provided on the mounting head (1), with which adjusting means at least the bead deflector (7) and the pressing roller (8) are adjustable to specific radii around the rotational axis (20) matched to the rim diameter, **characterised in that** the adjusting means contains at least mechanical radial adjusting means (3, 4, 5, 6), which are each separately connected to the bead deflector (7) and the pressing roller (8) and which are arranged and configured so that they displace the bead deflector (7) and the pressing roller (8) horizontally and radially approximately by the same radial amount to the rotational axis (20), while maintaining a predetermined tangential attitude.

2. Device according to claim 1, **characterised in that** the adjusting means for adjusting the radii for the different rim diameters (16, 17, 18) in the drive shaft (2) of the mounting head (1) contains a push rod (3), which terminates in the mounting head (1) and on which at least one deflection element (4) is fastened as radial adjusting means for radial horizontal deflection of the two pushing directions (14).

3. Device according to claim 1 or 2, **characterised in that** the adjusting means for adjusting the radii for the different rim diameters (16, 17, 18) on the mounting head (1) contains at least two adjusting plates (5, 6) as radial adjusting means, which each contain a recess (37), into which at least one adapted deflection element (4) engages in an interlocking and force-transmitting manner for radial horizontal deflection of the two pushing directions (14).

4. Device according to one of the preceding claims, **characterised in that** the deflection element is configured as at least one deflection rod (4), which runs inclined laterally and which slidingly engages into at least one matched recess (37) of each adjusting plate (5, 6) and by means of which the adjusting plates (5, 6) are horizontally and radially displaceable in at least both opposing longitudinal directions (35).

5. Device according to claim 4, **characterised in that**, for the interlocking and force-transmitting coupling, the deflection rod (4) has at least one cover face (15) with a predetermined inclination to the rotational axis (20) arranged to slide in the adjusting plates (5, 6).

6. Device according to claim 4 or 5, **characterised in that**, for the interlocking and force-transmitting coupling with the adjusting plates (5, 6), the deflection rod (4) has at least one cover face (15) arranged to slide in the adjusting plates (5, 6) and at least one slidingly arranged displacement groove (22) with the angle of inclination diverging from the cover face (15), wherein the adjusting plates (5, 6) are only displaceable in the two opposing longitudinal directions (35) of the adjusting plates (5, 6).

7. Device according to one of the preceding claims, **characterised in that** the adjusting plates (5, 6) are displaceably arranged in the mounting head (1) to slide parallel on each one another and are mounted in at least two opposing guide slots (13) and are displaceable at least in one radial opposing longitudinal direction (35).

8. Device according to one of the preceding claims, **characterised in that** the adjusting means contains mechanical tangential adjusting means (10, 28), which with a radial horizontal displacement of the radial adjusting means (4, 5, 6) in only two opposing radial longitudinal directions (35), tracks the fitting tools (7, 8, 9) oriented in other radial directions in their predetermined tangential attitudes according to the changes in angle Δα, Δβ.

9. Device according to claim 8, **characterised in that** at least one articulated lever (10) is provided as tangential adjusting means, which on its one side is rigidly connected to a rotatable fitting tool (7) and on its other side is mounted on the rotational axis (25) to be rotatable and longitudinally displaceable.

10. Device according to claim 8, **characterised in that** at least one pivotal joint (28) is provided as tangential adjusting means, which on its one side is rigidly connected to a rotatable fitting tool (9) and on its other side is connected to a radially displaceable fitting tool (8) by means of a rotatable rotary arm (31).

## Revendications

1. Dispositif pour monter un pneumatique sur la jante d'une roue avec un système de maintien de la jante et une tête d'embattage (1), reliée à un arbre d'entraînement, sur lequel sont disposés au moins un déviateur de bourrelet (7) et un galet presseur (8), un dispositif de réglage étant prévu sur la tête d'embattage au moyen duquel au moins le déviateur de bourrelet (7) et le galet presseur (8) peuvent être réglés pour certains rayons autour de l'axe de rotation en fonction du diamètre de la jante, **caractérisé en ce que** le dispositif de réglage comporte au moins des moyens d'ajustement mécaniques radiaux (3, 4, 5, 6) qui sont chacun relié séparément au déviateur de bourrelet (7) et au galet presseur (8) et sont conformés et disposés de telle sorte qu'ils puissent déplacer le déviateur de bourrelet (7) et le galet presseur (8) horizontalement et radialement à peu près de la même quantité radiale par rapport à l'axe de rotation (20) tout en conservant un réglage tangentiel prédéterminé.

2. Dispositif selon la revendication 1, **caractérisé en ce que** le dispositif de réglage, pour l'ajustement du rayon pour les différents diamètres de jante (16, 17, 18), comporte dans l'arbre d'entraînement (2) de la tête d'embattage (1) une tige de poussée (3) qui se termine dans la tête d'embattage (1) et sur laquelle est fixé, comme moyen de réglage radial, au moins un élément de déviation (4) pour la déviation horizontale radiale des deux directions de poussée (14).

3. Dispositif selon les revendications 1 et 2, **caractérisé en ce que** le dispositif de réglage, pour l'ajustement du rayon pour les différents diamètres de jante (16, 17, 18), comporte, comme moyen de réglage radial, sur la tête d'embattage (1) au moins deux plaques de réglage (5, 6) qui présentent chacune un évidement (37) dans lequel pénètre par concordance de forme et en force au moins un élément de déviation (4) pour la déviation radiale horizontale des deux directions de poussée (14).

4. Dispositif selon l'une des revendications précédentes **caractérisé en ce que** l'élément de déviation est formé par au moins une barre (4) s'étendant latéralement en biais, qui pénètre à glissement dans au moins un évidement adapté (37) de l'une des plaques de réglage (5, 6) et grâce à laquelle les plaques de réglage (5, 6) peuvent coulisser horizontalement et radialement dans au moins les deux directions longitudinales opposées (35).

5. Dispositif selon la revendication 4, **caractérisé en ce que** la barre de déviation (4) présente, pour une liaison par concordance de forme et en force, au moins une surface de recouvrement (15) disposée coulissante dans les plaques de réglage (5, 6) avec une inclinaison prédéterminée par rapport à l'axe de rotation.

6. Dispositif selon la revendication 4 et 5, **caractérisé en ce que** la barre de déviation (4) présente, pour une liaison par concordance de forme et en force avec les plaques de réglage (5, 6) au moins une surface de recouvrement (15) disposée coulissante dans les plaques de réglage (5, 6) et au moins une encoche de réglage (22) disposée à glissement avec un angle d'inclinaison différent de celui de la surface de recouvrement (15), les plaques de réglage (5, 6) ne pouvant être déplacées que dans les deux directions longitudinales opposées (35) des plaques de réglage (5, 6).

7. Dispositif selon l'une des revendications précédentes, **caractérisé en ce que** les plaques de réglage (5, 6) sont disposées sur la tête d'embattage (1), déplaçables parallèlement l'une à l'autre en glissement et sont montées dans au moins deux fentes de guidage (13) disposées l'une en face de l'autre et peuvent être déplacées dans au moins dans une direction longitudinale radiale (35) en sens inverse.

8. Dispositif selon l'une des revendications précédentes **caractérisé en ce que** le dispositif de réglage comporte des moyens de réglage mécaniques tangentiels (10, 28) qui, lors d'un déplacement radial horizontal des moyens de réglage radiaux (4, 5, 6) dans seulement deux directions longitudinales radiales opposées (35) donnent aux outils d'embattage (7, 8, 9), qui sont orientés dans d'autres directions radiales dans leurs réglages tangentiels prédéterminés, les variations angulaires Δα, Δβ.

9. Dispositif selon la revendication 8, **caractérisé en ce que** comme moyen de réglage tangentiel, il est prévu au moins un levier d'articulation (10) qui est rigidement relié par l'un de ses côtés avec un outil d'embattage (7) rotatif et est monté déplaçable en rotation et longitudinalement par son autre côté sur l'axe de rotation.

10. Dispositif selon la revendication 8, **caractérisé en ce que** comme moyen de réglage tangentiel, il est prévu au moins une articulation de rotation (28) qui est rigidement relié par l'un de ses côtés avec un outil d'embattage (9) rotatif et est relié par son autre côté à un outil d'embattage (8) rotatif radialement déplaçable au moyen d'un bras de rotation tournant (31).
